(19) Europäisches Patentamt
European Patent Office
Office européen des brevets

(11) **EP 3 811 748 B1**

(12) **EUROPEAN PATENT SPECIFICATION**

(45) Date of publication and mention
of the grant of the patent:
**18.05.2022 Bulletin 2022/20**

(21) Application number: **19205129.0**

(22) Date of filing: **24.10.2019**

(51) International Patent Classification (IPC):
**A01B 39/18** (2006.01)    **A01B 69/04** (2006.01)

(52) Cooperative Patent Classification (CPC):
**A01B 39/18; A01B 69/008**

(54) **A WEEDING MACHINE AND A METHOD FOR CARRYING OUT WEEDING USING THE WEEDING MACHINE**

JÄTMASCHINE UND VERFAHREN ZUM DURCHFÜHREN VON JÄTEN UNTER VERWENDUNG DER JÄTMASCHINE

MACHINE DE DÉSHERBAGE ET PROCÉDÉ PERMETTANT DE METTRE EN  UVRE LE DÉSHERBAGE À L'AIDE DE LA MACHINE DE DÉSHERBAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.04.2021 Bulletin 2021/17**

(73) Proprietor: **EKOBOT AB**
**721 32 Västerås (SE)**

(72) Inventors:
• **NORDBECK, Ulf**
**SE-129 32 Hägersten (SE)**
• **ANDERSSON, Robin**
**SE-722 11 Västerås (SE)**
• **BARKLUND, Albin**
**SE-722 42 Västerås (SE)**

(74) Representative: **Swea IP Law AB**
**Forskargatan 20G**
**151 36 Södertälje (SE)**

(56) References cited:
WO-A1-2017/002093    CN-A- 109 511 356
JP-B2- 4 247 895    US-A1- 2019 239 502

• PREZ-RUIZ M ET AL: "Automatic GPS-based intra-row weed knife control system for transplanted row crops", COMPUTERS AND ELECTRONICS IN AGRICULTURE, ELSEVIER, AMSTERDAM, NL, vol. 80, 10 October 2011 (2011-10-10), pages 41-49, XP028123417, ISSN: 0168-1699, DOI: 10.1016/J.COMPAG.2011.10.006 [retrieved on 2011-10-17]

**Description**

<u>Technical field</u>

The present invention relates to weeding machine and a method for carrying out weeding using the weeding machine. The invention relates to the technical field of agricultural machinery applications.

<u>Background</u>

Today, it is common to use chemical weeding of farmland. A disadvantage of chemical weeding is that the herbicide is wasteful and easily pollutes the environment. Mechanical weeding, such as cutting, is better for the environment but is more time-consuming.

Weeding machines, also named weeding robots, are used to automatically remove weeds during the seedling stage of crops. Weeding machines are suitable for crops that grow in rows such as corn, bean and onion. Weeds can be classified into "inter-row weeds" and "in-row weeds" according to spatial distribution characteristics. The so-called "inter row weeds" refer to weeds that grow between two rows of crops; while "in-row weeds" refer to weeds that grow in a crop line, that is, weeds that are in the same line as the crop.

CN101707992 discloses a weeding robot comprising a trolley, an automatic navigation and crop recognition camera and a control system. The weeding device comprises an inter-row cutting mechanism arranged under the trolley, and an in-row weeding mechanism. The inter-row cutting mechanism comprises a first weeding tool that removes the weed below the trolley during traveling of the trolley. The in-row weeding mechanism comprises a herbicide application roller and a weed cutting roller protruding from the trolley. The outer surface of the weed cutting roller has a blade edge rotating at high speed and the weed are cut due to the high-speed rotation of the roller. The inter-row cutting mechanism comprises two spaced apart rotating cylindrical saw discs. The saw discs are arranged movable in a horizontal as well as a vertical direction. The weeding robot detects the crops. The rotating saw discs are moved between two crops in the row while removing the weed between the crops in the row. When the saw discs are approaching the crop, the saw discs are moved away from each other in a horizontal direction to avoid removing the crop. After bypassing the crop, the two saw discs are restored from their separated position to a close position. By this cycle, the weeds in the crop rows can be removed without the need of identifying the weeds. A problem with this weeding robot is that it needs two cutting mechanisms to be able to cut weeds between the crops in the row as well as weeds close to the rows. Another problem is that the rotating saw discs will stir the soil when they are moved along the row of crops. This causes stirring of weed seed in the soil, and consequently stimulates growing of the weed seeds.

WO2019083336 discloses a method for distinguishing weeds from the crops in rows of crops using neural network technique. Images of crops and weeds are used to train the neural network. Information on the locations of rows of crops and information on the locations of weeds on the rows can be transmitted to a weeding machine so as to allow the weeding machine to transfer the weeding tool thereof to the corresponding locations and to perform weeding. However, this document teaches how to distinguish weeds from crops, but it does not teach how to control the weeding machine to remove the detected weed and to avoid removing the crops. Also WO2019/239502A relates to a weeding robot.

<u>Summary</u>

It is an aim of the present invention to at least partly overcome some of the above problems, and to provide an improved weeding machine.

This aim is achieved by a weeding machine as defined in claim 1.

The weeding machine enables efficiently removal of weed plants without damage of the crop plants. The weeding machine makes it possible to remove weed plants located at a distance from as well as near the crop plants. Another advantage with the present invention is that the weeding tool is only activated when there are weeds to be removed. Thus, the soil is not unnecessarily affected, and accordingly growing of weed seeds is less stimulated.

The safety distance can be a constant distance between the weed plant and the crop plant, or the safety distance may vary in dependence on the size or type of the crop. The length of the safety distance depends on the size of the crop plant. For example, when the crops are growing and become larger, the safety distance can be changed.

The plant detection system detects plants at a distance ahead of the weeding tool while the platform is moving in a first direction. This means that the plants are detected before the tool reaches the plants. Thus, there is time to determine whether the weed plant fulfils the safety distance to neighbouring crop plants and time to calculate an optimal tool activation position before the tool reaches the weed plant. The tool is activated when the tool reaches the calculated optimal tool activation position. Depending on the type of tool, it will take some time from the tool is activated until it can remove the weed. For example, if the tool must be moved to the weed to be able to remove the weed, the time to carry out the movement of the tool must be considered when calculating the optimal tool activation position. With an optimal tool activation position is meant a tool position estimated relative to the weed plant at which tool position the tool should be activated to have enough time be able to carry out the removal of the weed plant while the platform is moving. How the optimal tool activation position is calculated depends on the type of the tool. The tool can, for example, be a cutting tool, a spraying tool or a laser. Due to the fact that the tool is activated at the calculated optimal tool activation position, it is possible to efficiently remove selected weed plants.

The first direction is the driving direction of the platform. Preferably, the platform is controlled to follow a row of crop plants.

According to some aspects, the weeding control unit comprises a data buffer, and the weeding control unit is adapted to sort the weed plants that fulfil the safety distance in dependence on their positions, to store the sorted weed plants in the data buffer, and to retrieve the next weed plant for which a weeding action is to be carried out from the data buffer. The weed plants are sorted according to their positions in the driving direction of the platform before they are stored in the data buffer. Thus, it is possible to retrieve the closest weed plant from the data storage.

According to some aspects, the weeding mechanism comprises an actuator adapted to upon activation linearly move the weeding tool in a forth and back movement relative to the platform in a second direction between an initial tool position and a variable tool position, and said weeding control unit is adapted to determine the distance between the initial tool position and the position of the next weed plant in the second direction, and to control the actuator so that the weeding tool is moved at the determined distance in the second direction upon receiving the activation command. This makes it possible to move the tool to the position of the weed plant for carrying out the weeding action directly on the weed plant. Thus, it is possible for the tool to reach weed plants in different positions relative to the platform and accordingly at different distances from the platform in the second direction.

According to some aspects, the actuator is configured to move the weeding tool between the initial tool position and a maximum tool position. For example, the distance between the initial tool position and a maximum tool position is between 0.2 m and 0.5 m.

According to some aspects, the weeding control unit is adapted to determine whether it is possible for the tool to reach the calculated optimal tool activation position based on the current position of the tool, and to retrieve a new weed plant from the data buffer if it is not possible to reach the calculated optimal tool activation position. If it is possible to reach the calculated optimal tool activation position, the activation command is sent to the weeding mechanism when the tool has reached the optimal tool activation position. Thus, weed plants, which are located too close to the tool in the direction of travel to be able to be removed by the tool, are skipped. For example, if the tool has recently removed a weed plant and the tool is located at a distance away from its initial position, it takes some time to move the tool back to the initial position. If there is a short distance between the current position of the tool in the direction of travel and the calculated optimal tool activation position, the time to move the tool to the weed plant can be too short for the tool to reach the weed plant.

According to some aspects, the weeding control unit is adapted to calculate the time needed for moving the tool to the position of the next weed plant based on a predetermined formula for the time needed for carry out a weeding action in dependence on the distance between the between the initial position of the tool and the position of the next weed plant in the second direction, and to determine the optimal tool activation position based on the current speed of the platform, the calculated time needed for carry out the weeding action, and the position of the weed plant in the first direction. The formula for the time needed for carry out the weeding action depends on the weeding tool and can be determined empirically.

The first and second directions are substantially perpendicular. According to some aspects, said weeding tool is a cutting tool having a cutting edge arranged substantially perpendicular to the second direction. This type of tool makes it possible to carry out a precise cut when the tool is moved in the second direction. Accordingly, it is possible to cut a selected weed plant without cutting neighbouring crop plants in the row.

According to some aspects, said actuator comprises a horizontal shaft movable in said linear direction, a vertical distance element attached to one end of the horizontal shaft, a motor arranged to move the horizontal shaft along its axis so that the weeding tool is moved in said forth and back movement relative to the platform, and the weeding tool is attached to a lower end of the vertical distance element.

According to some aspects, the weeding machine comprises a support unit movably connected to the platform to allow the support unit to move relative to the platform in a vertical direction during movement of the platform, the support unit comprises a support wheel, and the weeding mechanism is attached to support unit. Thus, the tool will follow the topology of the ground.

According to some aspects, the plant detection system comprises a sensor for detecting the plants, which sensor is attached to the support unit. Thus, the sensor will follow the topology of the ground.

According to some aspects, the plant detection system comprises a sensor for detecting the plants and a vision system. For example, the sensor for detecting the plants is a camera.

According to some aspects, the drive mechanism for driving the platform comprises one or more sensors for measuring the speed of the platform and the data processing circuitry of the weeding control unit is configured to obtain information on the speed of the platform from the drive mechanism. The sensors are, for example, encoders arranged on the wheels of the platform to measure the speed of the platform.

The aim is also achieved by the method according to claim 9 for carrying out weeding using a weeding machine according to the invention.

As easily understandable, some of the steps in the method claims can be carried out in a different order.

The term "obtain information" covers receiving information as well as retrieving the information.

According to some aspects, the method comprises:

- sorting the weed plants that fulfil the safety distance in dependence on their positions in the first direction,
- selecting the next weed plant for which a weeding action is to be carried out based on the sorting. Preferably, the weed plant closest to the current position of the tool is selected.

According to some aspects, the weeding mechanism comprises an actuator adapted to upon activation linearly move the weeding tool in a forth and back movement relative to the platform in a second direction between the initial position of the tool and a variable second position, and the method comprises determining the distance between the initial tool position and the position of the next weed plant in the second direction, and moving the weeding tool the determined distance upon receiving the activation command.

According to some aspects, the step calculating the optimal tool activation position comprises calculating the distance between the initial position of the tool and the position of the next weed plant in the first direction, calculating the time needed for moving the tool to the position of the next weed plant based on a predetermined formula for the time needed for carrying out a weeding action in dependence on the distance between the initial position of the tool and the position of the next weed plant in the second direction, and determining the optimal tool activation position based on the current speed of the platform, the calculated time needed for carry out the weeding action, and the distance between the initial position of the tool and the position of the next weed plant in the first direction.

Brief description of the drawings

The invention will now be explained more closely by the description of different embodiments of the invention and with reference to the appended figures.

Fig. 1 is a schematic perspective view of an example of a weeding machine according to the invention.
Fig. 2 shows the weeding machine in a side view.
Fig. 3 shows a block diagram of an example of a weeding control unit and a plant detection system.
Fig. 4a shows the weeding machine in a front view with the weeding tool in the initial position.
Fig. 4b shows the weeding machine in a front view with the weeding tool performing a weeding action.
Fig. 5 shows an example of how the tool is moved between the initial tool position and the weed plants during weeding.

Fig. 6 illustrates how to calculate an optimal tool activation position.

Detailed description

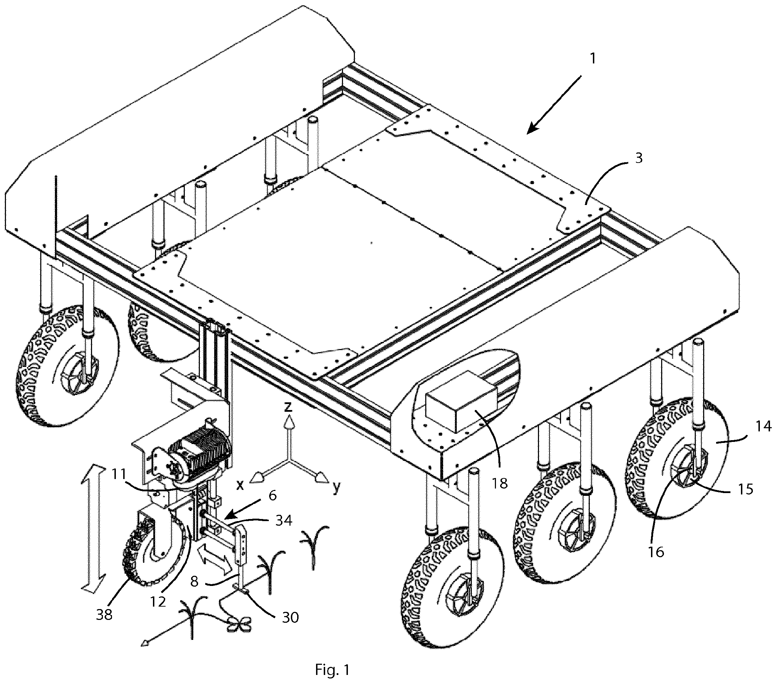

Figures 1- 2, 4a-4b show an example of a weeding machine 1 in different views. The weeding machine 1 comprises a movable platform 3, a drive mechanism for driving the platform 3, and a weeding mechanism 6 connected to the platform for carrying out weeding of weed plants. The weeding mechanism 6 comprises a weeding tool 8 adapted to carry out a weeding action upon receiving an activation command. In this example, the weeding tool 8 is arranged in front of the platform 3. Preferably, the weeding tool 8 has a fixed position relative to the platform 3 in the first direction. Thus, the current position of the tool in the first direction is known if the current position of the platform is known. In this example, the weeding tool 8 is arranged movable relative to the platform in a vertical direction so that the tool 8 will stay close to the ground independently of variations in the ground level. Alternatively, the weeding tool 8 is fixedly attached to the platform.

The purpose of the weeding action is to remove or kill the weed plant. Different types of weeding tools can be used. For example, the weeding tool can be a cutting tool, a laser, a spraying nozzle, or a gas nozzle. The weeding action to be carried out upon receiving the activation command depends on the type of the weeding tool. For example, if the weeding tool is a cutting tool, the cutting tool is moved to the weed plant to be removed with a certain speed upon receiving the activation command.

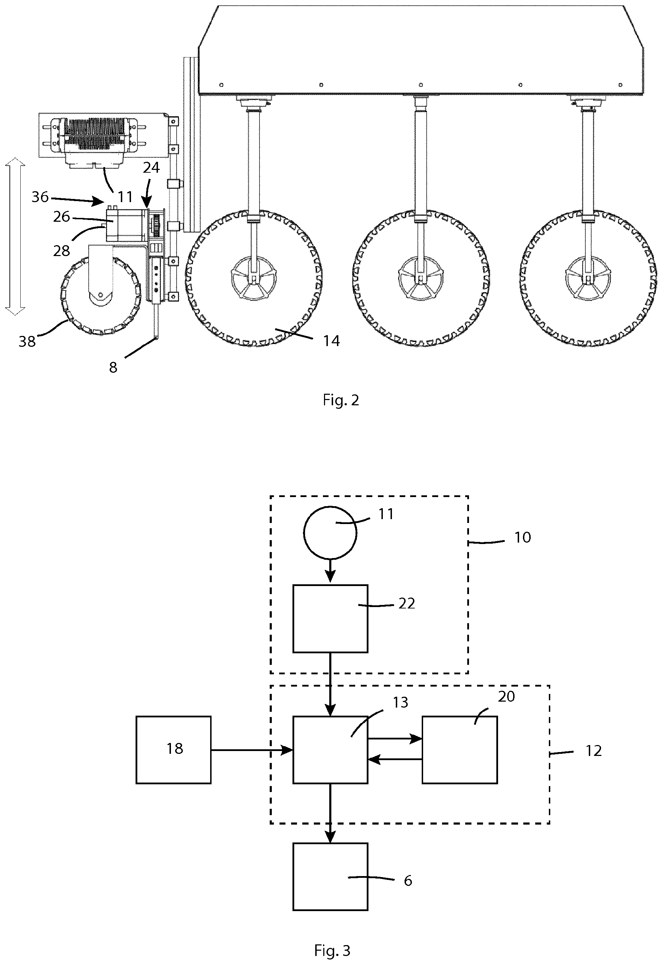

The weeding machine 1 comprises a plant detection system 10 adapted to detect plants at a distance ahead of the weeding tool 8 while the platform 3 is moving in a first direction x, to determine the positions of the detected plants, and to determine the type of the detected plants. The type of the plants being an indication whether the detected plants are weed plants or crop plants. Thus, the plant detection system 10 is capable to distinguish between weed plants and crop plants, and to determine the positions of the weed plants and the crop plants. The first direction x is the direction of travel of the platform. The plant detection system 10 comprises a sensor 11 arranged in connection to the platform for identifying the plants. The sensor 11 is adapted to generate images of the plants. The sensor 11 is mounted at a distance above the weeding tool 8 in a vertical direction z, and at a distance in front of the weeding tool 8 in the first direction x, as shown in figure 2. Thus, it is possible to detect a weed plant at a point of time before the tool passes by the weed plant. The distance between the tool and the sensor 11 in the first direction x is fixed and known. Suitably, there is a sensor coordinate system having its origin in the sensor and the position of the plants and the position of the tool is determined in the sensor coordinate system. The sensor 11 is arranged so that it has a field of view including a distance in front of the tool in the first direction x. Preferably, the sensor is arranged so that the tool 8 is within the field of view of the camera. Thus, it is easy to determine the distance between the tool and the weed plants based on the images from the sensor.

For example, the sensor 11 is a camera taking images in the form of photos of the ground in front of the weeding tool 8. Alternatively, the sensor 11 can be an energy reflection analysis sensor such as a laser sensor. In this example, the sensor 11 is a camera mounted at a distance above and in front of the weeding tool 8.

For example, the plant detection system 10 comprises a vision system arranged to obtain the images from the sensor 11. The vision system is adapted to detect the plants and to determine the positions of the detected plants based on the received images. The vision system is further adapted to determine whether the detected plants are weed plants and crop plants based on the images. This is, for example, done by using neural networks technique, as described in WO2019083336. Images of crops and weeds are used to train the neural network.

The weeding machine 1 further comprises a weeding control unit 12 for controlling the weeding mechanism 6. The weeding control unit 12 comprises a data processing circuitry configured to obtain information on the speed of the platform from the drive mechanism, to obtain the positions and type of the detected plants from the plant detection system 10, to determine whether the weed plants fulfil a safety distance from the crop plants based on the positions of the plants, to determine the next weed plant for which a weeding action is to be carried out, to calculate an optimal tool activation position based on the position of the next weed plant, the current position of the tool in the first direction, and the speed of the platform, and to send an activation command to the weeding mechanism when the tool has reached the optimal tool activation position. The plant detection system 10 and the weeding control unit 12 may share the same data processing circuitry. The data processing circuitry can be any suitable means for processing data, such as a computer, a CPU, and programmable circuit, such as FPGAs.

To avoid damages on the crop plants, the weeding control unit is adapted to determine for each detected weed plant whether the weed plant fulfils a safety distance between the weed plant and neighbouring crop plants. This is done by comparing the positions of the weed plant and the crop plants and determine if the shortest distance between them is larger than the safety distance. The weed plant fulfils the safety distance if the distance between the weed plant and the neighbouring crop plants is larger than the safety distance. The safety distance can be predetermined. The length of the safety distance depends on the size and type of the crop plant. The safety distance can be a predetermined distance between the weed plant and the crop plant. For instance, the safety distance can be between 1 - 3 cm, and preferably between 1.5 and 2 cm. Alternatively, the safety distance may vary in dependence on the size or type of the crop. For example, when the crops are growing and become larger, the safety distance can be increased. If the weed plant fulfils the safety distance to the neighbouring crop plants, the weed plant can be removed without risk of damaging the crop plant.

If the weed plant fulfils the safety distance, but is located on an opposite side of a crop plant compared to the tool, there may be a risk that tool will damage the crop plant on its way to the weed plant. In such case, the weeding action can be postponed until the weeding machine travels on the other side of the row and it will be safe to cut the weed plant. Alternatively, the weeding machine may comprise two weeding mechanisms arranged spaced apart in the second direction, which can operate independently of each other and simultaneously carry out weeding on opposite sides of a row of crop plants. Each of the weeding mechanisms comprises a tool, and thus the tools can be located on opposite sides of the row. In such embodiment, the weeding control unit 12 can be adapted to select the tool closest to the weed plant in the Y-direction. For example, the selection is done depending on where the weed plant is in the field of view of the camera. For each tool, there can be a formula which is used to calculate the time it takes to beat weeds. In this way, two completely different tools with different stroke rates can be used.

The platform 3 is provided with a plurality of wheels 14. In this example, the platform is provided with six wheels 14. However, the number of wheels may vary. The drive mechanism for driving the platform comprises a plurality of motors 15. Preferably, each of the wheels 14 is provided with one motor 15 for actuating the wheel. The motors are, for example, electrical hub motors mounted on the wheels. In one aspect, each of the motors is provided with a sensor 16 for determining the speed of the wheel. For example, each of the motors is provided with an encoder for determining the angular position of the motor 15. The drive mechanism of the platform 3 further comprises a platform control unit 18 for controlling the motions of the platform. The outputs from the sensors 16 are sent to the platform control unit 18. The platform control unit 18 is configured to determine the speed of the platform 3 based on the output from the sensors 16. Optionally, platform control unit 16 may comprise a GPS for determining the position of the platform in a world coordinate system. The platform control unit 18 may also comprise an IMU (Inertial Measurement Unit) for determining the position and orientation of the platform. Optionally the platform control unit 18 is configured to calculate the speed of the platform based on the output from the sensors 16 as well as output from the GPS and the IMU. This will improve the accuracy of the calculated speed of the platform. Information on the current speed of the platform is sent to the weeding control unit 12 from the platform control unit 18.

The platform control unit 18 comprises a processing circuitry configured to determine a path for the platform and to control the motions of the wheels so that the platform follows the determined path. The platform control unit 18 controls the speed and the direction of the wheels. The platform control unit 18 is configured to obtain the positions of the crop plants and to determine the path for the platform based on the positions of the crop plants so that the platform follows the row of crop plants. For example, the platform control unit 18 receives the positions of the crop plants from the plant detection system 10. Optionally, the platform control unit 18 may comprise a second vision system including a second camera for detecting the crop plants and to determining the positions of the crop plants.

In one example, the weeding machine 1 comprises a support unit 36 movably connected to the platform 3 to allow the support unit to move relative to the platform in a vertical direction z during movement of the platform, as shown in figure 2. The support unit 36 comprises a support wheel 38. The weeding mechanism 6 including the weeding tool 8 is attached to support unit 38. Further, the sensor 11 for identifying the plants is attached to the support unit 36. Thus, the positions of the sensor 11 and the weeding tool are fixed relative to each other, but movable relative to the platform in the vertical direction z.

Figure 3 shows a block diagram of an example of a weeding control unit 12 and a plant detection system 10. The weeding control unit 12 comprises the data processing circuitry 13 and a data buffer 20 for storing weed plants that fulfil the safety distance. The plant detection system 10 comprises the sensor 11 and a vision system 22 configured to obtain images from the sensor 11. The vision system 22 may comprise a data processing circuitry of its own or share the same data processing circuitry as the weeding control unit. The plant detection system 10 is configured to send information on positions and type of detected plants to the weeding control unit 12. The weeding control unit 12 receives information on the current speed of the platform from the platform control unit 18. The weeding control unit 12 is configured to generate an activation command for the weeding tool 8 based on the current speed of platform, the current position of the tool in the first direction x, and the positions of the weed plants. The current position of the tool in the first direction is known with respect to the sensor coordinate system since the relation between the position of the tool 8 and the position of the sensor 11 in the first direction is known. The activation command is sent to the weeding mechanism 6.

In one example, the data processing circuitry 13 is configured to sort the detected weed plants that fulfil the safety distance in dependence on their positions, and to store the sorted weed plants in the data buffer 20. The weed plants are sorted in dependence on their positions with respect to the current position of the tool. Suitably, the weed plants are sorted so that the weed plants closest to the current position of the tool are first in the buffer, since they must be removed before the weed plants situated further away from the tool are removed. The data processing circuitry 13 is configured to retrieve the next weed plant for which a weeding action is to be carried out from the data buffer 20. The next weed plant should be the weed plant closest to the current position of the tool. This is the first weed plant in the buffer due to the sorting of the weed plants. Suitably, the weed plant is discarded if the distance between the current tool position in the first direction is too short for the tool to be able to remove the weed plant.

When the next weed plant has been retrieved from the data buffer, the weeding control unit calculates an optimal tool activation position. The optimal tool activation position is an estimated position relative to the weed plant at which the tool should be activated to have enough time be able to carry out the removal of the weed plant while the platform is moving. How the optimal tool activation position is calculated depends on the type of tool. Due to the fact that the tool is activated at the calculated optimal tool activation position, it is possible to efficiently remove selected weed plants.

In one example, the weeding mechanism 6 comprises an actuator 24 adapted to upon activation linearly move the weeding tool 8 in a forth and back movement relative to the platform 3 in a second direction y between an initial tool position $y_{TI}$ and a variable tool position, as shown in figure 1. The second direction y differs from the first direction x.

According to the invention, the second direction y is perpendicular to the direction of travel of the platform, i.e. perpendicular to the first direction x. In this example, the weeding tool 8 can be a cutting tool or a nozzle for spraying gas or herbicide.

For example, the weeding tool 8 is a cutting tool having a cutting edge 30 arranged substantially perpendicular to the second direction y to be able to cut the weed plants during the linear movement of the cutting tool 8, as shown in figure 1.

In the following, the first direction is denoted the x direction and the second direction is denoted the y direction.

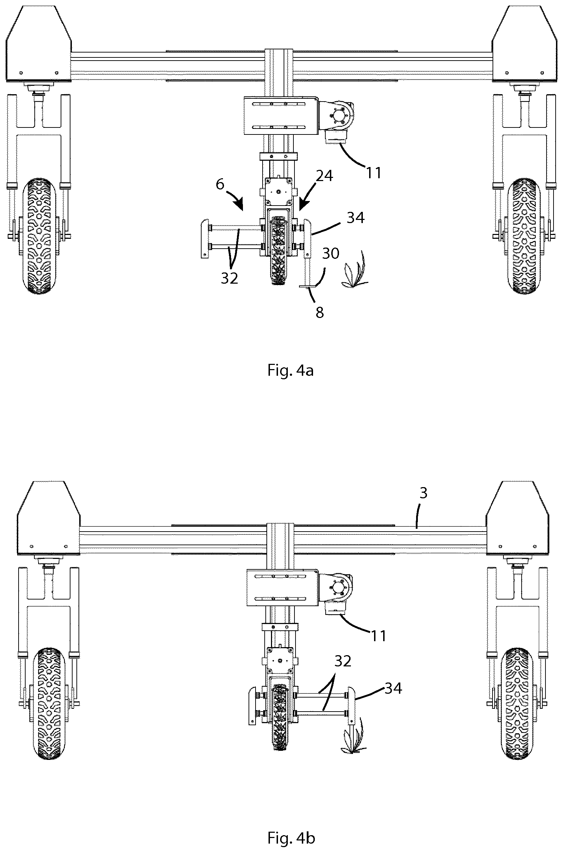

Figure 4a shows the weeding machine 1 in a front view with the weeding tool 8 in the initial tool position. The initial tool position is meant the initial position of the tool in the y direction. When the tool has removed a weed plant, for example, cut the weed plant, the tool returns to its initial position. Preferably, the tool should always return to the initial position before it starts a new forth and back movement. The tool can be in the initial position when it is not in use, i.e. before and after it has been activated. The initial position is the start position and the end position of the forth and back movement of the tool in the y direction. The actuator 24 may comprise a motor 26 for moving the tool in the y direction, as shown in figure 2. To be able to know the current position of the tool 8 in the y direction, the actuator 24 is provided with a sensor 28 for measuring the position of the tool. For example, the sensor 28 is an encoder arranged on the motor 26.

The actuator 24 may comprise a horizontal shaft 32 movable in the y direction and a vertical distance element 34 attached to one end of the horizontal shaft 32. The actuator 24 may comprise two horizontal shafts 32 arranged in parallel as shown in figure 4b. The motor 26 is arranged to move the horizontal shaft 32 along its axis so that the weeding tool 8 is moved in the forth and back movement relative to the platform. The weeding tool can be attached to a lower end of the vertical distance element 34.

Figure 4b shows the weeding machine in a front view when the weeding tool 8 is performing a weeding action. The actuator 24 is capable to move the weeding tool 8 between the initial tool position and a maximum tool position. For example, the distance between the initial tool position and the maximum tool position is between 0.2 m and 0.5 m. The tool is moved to and from the weed plant during the forth and back movement of the tool. The distance the tool must be moved in the y direction to be able to remove the weed plant depends on the distance ($\Delta y$) between the initial tool position $y_{TI}$ and the position $y_w$ of the weed plant in the y direction. The weeding control unit 12 is adapted to determine the distance ($\Delta y$) between the initial tool position and the position of the weed plant in the y direction, and to control the actuator so that the weeding tool is moved the determined distance ($\Delta y$) in the y direction upon receiving the activation command.

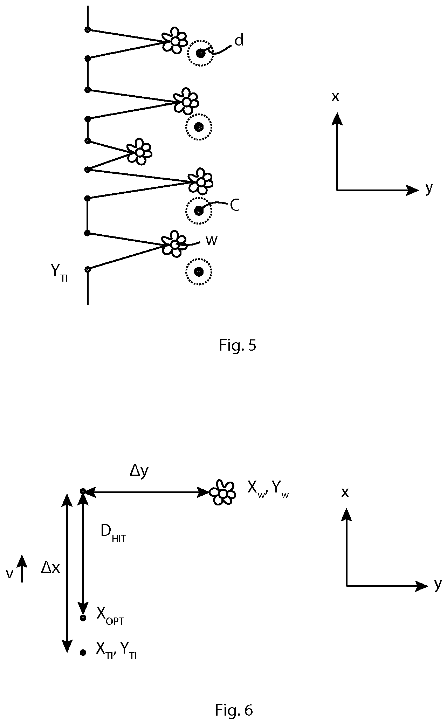

Figure 5 shows an example of the path of the weeding tool 8 when the tool is moved between the initial tool position ($x_{TI}$) and the weed plants W during weeding. The crop plants are denoted C in the figure 5. The safety distance d is indicated with dotted circles around the crop plants.

Figure 6 illustrates how to calculate an optimal tool activation position $x_{OPT}$. The tool 8 is fixed relative to the platform 3 and the sensor 11 in the x direction, and movable relative to the platform in the y direction. The initial tool position $x_{TI}$ is known since it is fixed relative to the platform and the sensor 11. The optimal tool activation position $x_{OPT}$ depends on the distance $\Delta y$ between the initial tool position $y_{TI}$ and the position $y_w$ of the weed plant in the y direction, the position $x_w$ of the weed plant in the x direction, and the current speed V of the platform. The calculations of the optimal tool activation position are suitably made in the sensor coordinate system having an origin defined in a centre of the sensor 11, such as the centre of the camera. The positions ($x_w$, $y_w$) of the weed plants are suitably determined in the sensor coordinate system. This means that the position of a weed plant is the distance from the centre of the sensor 11 in the x and y directions at a predetermined height.

The position $x_T$ of the tool in the x direction is known since the tool is fixed relative to the sensor 11 in the x direction. The distance $\Delta x$ between the weed plant and the tool in the x-direction can be calculated as: $\Delta x = x_w - x_T$. The distance $\Delta y$ between the weed plant and the initial position of the tool in the y-direction can be calculated as: $\Delta y = y_W - y_{TI}$.

The speed V of the platform 3 in the x-direction can be determined based on the output from the sensors 16 on the wheels 14. Optionally, the speed V of the platform can also be determined based on the output from a GPS and an IMU located on the platform.

The optimal tool activation position $x_{OPT}$ depends on the time $T_{HIT}$ needed to carry out a weeding action, i.e. the time needed to move the tool in the y-direction from the initial tool position $y_{TI}$ to the position $y_W$ of weed plant and to carry out the weeding action. To determine the time $T_{HIT}$ a predetermined formula can be used. The formula reflects the relation between the time $T_{HIT}$ needed to carry out a weeding action and the distance $\Delta y$ between the weed plant and the initial position of the tool in the y direction. The time $T_{HIT}$ depends on the type of the tool and the speed of the tool in the y-direction. If the tool is a cutting tool, high speed of the tool in the cutting moment is crucial for the result of the cutting. For example, the speed of the tool depends on the shape and sharpness of the tool. During the movement of the tool in the y direction, the tool must be accelerated to the desired speed and then deaccelerated before it can be moved back to the initial position. The formula for calculating $T_{HIT}$ can be empirically determined by carrying out a large number of tests and measuring the time it takes to carry out the weeding action for different distances $\Delta y$ between the weed plant and the initial position of the tool.

$$T_{HIT} = f(\Delta y)$$

where $f(\Delta y)$ is a function determined based on tests, and $\Delta y$ is the distances in the y-direction between the initial position $y_{TI}$ of the tool and the position of the weed plant $y_W$. The function $f(\Delta y)$ derived depends on the tool. The function $f(\Delta y)$ can be linear of non-linear.

Find below an example of a formula for calculating the time $T_{HIT}$ needed to carry out a weeding action in dependence on the distances $\Delta y$ for the cutting tool 8 shown in figure 1, which cut the weed plants during the linear movement of the cutting tool. In this case $f(\Delta y)$ is a linear function.

$$T_{HIT} = \Delta y * K_1 + K_2$$

Where $K_1$ and $K_2$ are constants and determined based on tests. The value of the constants $K_1$ and $K_2$ depends on tool, such as the sharpness of the tool. Thus, different tools will have different values of the constants $K_1$ and $K_2$.

In a next step, the distance $D_{HIT}$ that the platform travels in the x-direction during the time $T_{HIT}$ it takes to carry out the weeding action is calculated using the current speed V of the platform.

$$D_{HIT} = V * T_{HIT}$$

The optimal tool activation position $x_{OPT}$ can then be determined by subtracting the distance $D_{HIT}$ from the position $x_w$ of the weed plant in the x-direction.

$$x_{OPT} = x_w - D_{HIT}$$

The weeding control unit 12 supervises the position of the tool in the x-direction and sends an activation command to the weeding mechanism 6 when the tool 8 has reached the optimal tool activation position $x_{OPT}$.

Suitably, the weeding control unit 12 is adapted to determine whether it is possible for the tool to reach the calculated optimal tool activation position $x_{OPT}$ based on the current position $(x_T,y_T)$ of the tool. If it is possible to reach the calculated optimal tool activation position, the activation command is sent to the weeding mechanism 6 when the tool 8 has reached the optimal tool activation position $x_{OPT}$. For example, if the tool has not yet reached the optimal tool activation position $x_{OPT}$ and the tool is in the initial position, it is possible to carry out the weeding action. In that case, the weeding control unit should send an activation command to the weeding mechanism 6 when the tool has reached the optimal tool activation position $x_{OPT}$. If the tool has recently removed a weed plant and the tool is located a distance away from its initial position in the y direction, the time needed to move the tool back to the initial position can be calculated and be taken into account when determining whether or not it is possible for the tool to reach the calculated optimal tool activation position $x_{OPT}$. If it is not possible to reach the calculated optimal tool activation position, a new weed plant can be retrieved from the data buffer, and the optimal tool activation position is calculated for the new weed plant. Thus, weed plants which are located too close to the tool in the direction of travel to be able to be removed by the tool can be skipped. Information on the skipped weed plants can be stored and used the next time the weeding machine carries out weeding of the row.

Based on the above, a method according to claim 9 for carrying out weeding using the weeding machine 1 is disclosed.

Most steps of the method are preferably carried out by programming instructions executed by one or more data processing circuitry, as described above. The method is repeated during travelling of the weeding machine along the row of crops.

The method comprises sorting the weed plants that fulfil the safety distance in dependence on their positions and selecting the next weed plant for which a weeding action is to be carried out based on the sorting. Preferably, the weed plant closest to the current position of the tool is selected. The method may further comprise storing the sorted weed plants in a data buffer and retrieving the next weed plant for which a weeding action is to be carried out from the data buffer.

The method comprises determining the distance $\Delta y$ between the initial tool position and the position of the next weed plant in the second direction, and moving the weeding tool the determined distance $\Delta y$ upon receiving the activation command.

The step calculating the optimal tool activation position comprises calculating the time needed for moving the tool to the position of the next weed plant based on a predetermined formula for the time needed for carry out a weeding action in dependence on the distance $\Delta y$ between the initial position of the tool and the position of the next weed plant in the second direction, and determining the optimal tool activation position based on the current speed of the platform, the calculated time needed for carry out the weeding action, and the position of the weed plant in the y direction.

The present invention is not limited to the embodiments disclosed but may be varied and modified within the scope of the following claims. For example, the weeding machine may comprise two weeding mechanisms arranged spaced apart in the second direction, and which can operate independently of each other and simultaneously carry out weeding on opposite sides of a row of crop plants. The weeding machine may comprise more than two weeding mechanisms arranged spaced apart in the second direction so that two or more rows of weeding plants can be weeded simultaneously.

**Claims**

1. A weeding machine (1) comprising:

   - a movable platform (3),
   - a drive mechanism (15, 18) driving the platform in a first direction (x),
   - a weeding mechanism (6) connected to the platform comprising a weeding tool (8) adapted to carry out a weeding action and an actuator (24) adapted to move the weeding tool (8) in a second direction (y) perpendicular to the first direction (x) upon receiving an activation command,
   - a plant detection system (10) adapted to:

     o detect plants at a distance ahead of the weeding tool (8) while the platform is moving in the first direction (x),
     o determine the type of the detected plants, the type being an indication whether the detected plants are weed plants or crop plants, and
     o determine the positions of the detected crop plants, and

   - a weeding control unit (12) for controlling the weeding mechanism (6), wherein the weeding control unit (12) comprises a data processing circuitry (13) configured to:

    o obtain information on the speed of the platform,
    o receive the positions of the detected crop plants from the plant detection system (10),
    o calculate an optimal tool activation position ($x_{OPT}$) based on the current position of the tool in the first direction (x), and the speed (V) of the platform, and

send an activation command to the weeding mechanism when the tool has reached the optimal tool activation position, **characterized in that**
- the weeding tool (8) is adapted to carry out the weeding action when the tool is moved in the second direction (y),
- the plant detection system (10) is adapted to determine the positions of the detected weed plants,
- the data processing circuitry (13) is configured to:

    o receive the positions of the detected weed plants from the plant detection system (10),
    o determine whether the detected weed plants fulfil a safety distance from the crop plants by comparing the positions of the weed plant and the crop plants and determine if the distance between the weed plant and the crop plants is larger than the safety distance,
    o sort the weed plants that fulfil the safety distance (d) in dependence on their positions and store the sorted weed plants in a data buffer (20),
    o retrieve the next weed plant for which a weeding action is to be carried out from the data buffer,
    o determine the distance ($\triangle y$) between an initial tool position and the position of the next weed plant in the second direction (y),
    o calculate the optimal tool activation position ($x_{OPT}$) for the retrieved weed plant based on the position of the weed plant and the time needed to carry out the weeding action, and

the weeding control unit (12) is adapted to control the actuator (24) so that the weeding tool (8) is moved the determined distance ($\triangle y$) in the second direction for carrying out the weeding action on the weed plant upon receiving the activation command.

2. The weeding machine according to claim 1, wherein the actuator (24) is adapted to upon activation linearly move the weeding tool (8) in a forth and back movement relative to the platform (3) in the second direction (y) between an initial tool position ($y_{TI}$) and a variable tool position.

3. The weeding machine according to claim 1 or 2, wherein the weeding control unit (12) is adapted to calculate the time needed for moving the tool to the position of a next weed plant based on a predetermined formula for the time needed to carry out a weeding action in dependence on the distance ($\triangle y$) between the initial position of the tool and the position of the next weed plant in the second direction, and to determine the optimal tool activation position ($x_{OPT}$) based on the current speed (V) of the platform, the calculated time needed for carry out the weeding action, and the position ($y_w$) of the weed plant in the second direction.

4. The weeding machine according to any of the previous claims , wherein said weeding tool (8) is a cutting tool having a cutting edge (30) arranged substantially perpendicular to the second direction (y).

5. The weeding machine according to any of the claims 1 - 4, wherein said actuator (24) comprises at least one horizontal shaft (32) movable in the second direction (y), a vertical distance element (34) attached to one end of the horizontal shaft, a motor (26) arranged to move the at least one horizontal shaft (32) along its axis so that the weeding tool (8) is moved in said forth and back movement relative to the platform (3), and the weeding tool (8) is attached to a lower end of the vertical distance element (34).

6. The weeding machine according to any of the previous claims, wherein the weeding machine (1) comprises a support unit (36) movably connected to the platform (3) to allow the support unit (36) to move relative to the platform in a vertical direction (z) during movement of the platform, the support unit (36) comprises a support wheel (38), and the weeding mechanism (6) is attached to support unit.

7. The weeding machine according to claim 6, wherein the plant detection system (10) comprises a sensor (11) for detecting the plants, which sensor (11) is attached to the support unit (36).

8. The weeding machine according to any of the previous claims, wherein the drive mechanism for driving the platform comprises one or more sensors (16) for measuring the speed (V) of the platform (3) and the data processing circuitry (13) of the weeding control unit is configured to obtain information on the speed of the platform from the drive mechanism.

**9.** A method for carrying out weeding using a weeding machine (1) comprising a movable platform (3) and a weeding mechanism (6) connected to the platform and comprising a weeding tool (8) adapted to carry out a weeding action, wherein the weeding tool has a known initial position relative to the platform and the method comprises:

- detecting plants at a distance ahead of the weeding tool (8) while the platform (3) is moving in a first direction (x),
- determining whether the detected plants are weed plants or crop plants, and
- determining the positions of the detected crop plants,

**characterized in that** the method comprises:

- determining the positions of the detected weed plants,
- determining whether the weed plants fulfil a safety distance (d) from the crop plants by comparing the positions of the weed plant and the crop plants and determine if the distance between the weed plant and the crop plants is larger than the safety distance,
- sorting the weed plants that fulfil the safety distance in dependence on their positions,
- selecting the next weed plant for which a weeding action is to be carried out based on the sorting,
- obtaining information on the speed (V) of the platform,
- determining the distance ($\Delta y$) between the initial tool position and the position of the next weed plant in a second direction (y) perpendicular to the first direction (x),
- calculating an optimal tool activation position ($x_{OPT}$) for the retrieved weed plant based on the position of the weed plant, the current position of the tool in the first direction (x), the speed of the platform, and the time needed to carry out the weeding action,
- generating an activation command when the tool has reached the optimal tool activation position ($x_{OPT}$), and
- moving the weeding tool (8) the determined distance ($\Delta y$) in the second direction for carrying out the weeding action on the weed plant upon receiving the activation command.

**10.** The method according to claim 9, wherein step calculating the optimal tool activation position comprises calculating the time needed for moving the tool to the position of the next weed plant based on a predetermined formula for the time needed for carry out a weeding action in dependence on the distance ($\Delta y$) between the initial position of the tool and the position of the next weed plant in the second direction, and determining the optimal tool activation position based on the current speed of the platform, the calculated time needed for carry out the weeding action, and the position of the weed plant in the first direction.

**Patentansprüche**

**1.** Jätmaschine (1), umfassend:

- eine bewegliche Plattform (3),
- einen Antriebsmechanismus (15, 18), der die Plattform in einer ersten Richtung (x) antreibt,
- einen Jätmechanismus (6), der mit der Plattform verbunden ist, umfassend ein Jätwerkzeug (8), das angepasst ist, um eine Jätaktion durchzuführen, und einen Stellantrieb (24), der angepasst ist, um das Jätwerkzeug (8) nach dem Empfangen eines Aktivierungsbefehls in einer zweiten Richtung (y) senkrecht zu der ersten Richtung (x) zu bewegen,
- ein Pflanzenerkennungssystem (10), das angepasst ist, um:

    ◦ Pflanzen in einem Abstand vor dem Jätwerkzeug (8) zu erkennen, während sich die Plattform in die erste Richtung (x) bewegt,
    ◦ die Art der erkannten Pflanzen zu bestimmen, wobei die Art eine Angabe ist, ob die erkannten Pflanzen Unkrautpflanzen oder Kulturpflanzen sind, und
    ◦ die Positionen der erkannten Kulturpflanzen zu bestimmen, und

- eine Jätsteuereinheit (12) zum Steuern des Jätmechanismus (6), wobei die Jätsteuereinheit (12) eine Datenverarbeitungsschaltung (13) umfasst, konfiguriert, um:

    ◦ Informationen über die Geschwindigkeit der Plattform zu erhalten,
    ◦ die Positionen der erkannten Kulturpflanzen von dem Pflanzenerkennungssystem (10) zu empfangen,
    ◦ eine optimale Werkzeugaktivierungsposition ($x_{OPT}$) basierend auf der aktuellen Position des Werkzeugs in der ersten Richtung (x) und der Geschwindigkeit (V) der Plattform zu berechnen, und

    Senden eines Aktivierungsbefehls an den Jätmechanismus, wenn das Werkzeug die optimale Werkzeugaktivierungsposition erreicht hat, **dadurch gekennzeichnet, dass**
    - das Jätwerkzeug (8) angepasst ist, um die Jätaktion durchzuführen, wenn das Werkzeug in die zweite Richtung (y) bewegt wird,
- das Pflanzenerkennungssystem (10) angepasst ist, um die Positionen der erkannten Unkrautpflanzen zu bestimmen,
- die Datenverarbeitungsschaltung (13) konfiguriert ist, um:

∘ die Positionen der erkannten Unkrautpflanzen von dem Pflanzenerkennungssystem (10) zu empfangen,
∘ zu bestimmen, ob die erkannten Unkrautpflanzen einen Sicherheitsabstand von den Kulturpflanzen erfüllen, indem die Positionen der Unkrautpflanzen und der Kulturpflanzen verglichen werden, und zu bestimmen, ob der Abstand zwischen der Unkrautpflanze und den Kulturpflanzen größer als der Sicherheitsabstand ist,
∘ die Unkrautpflanzen, die in Abhängigkeit von ihren Positionen den Sicherheitsabstand (d) erfüllen, zu sortieren und die sortierten Unkrautpflanzen in einem Datenpuffer (20) zu speichern,
∘ die nächste Unkrautpflanze, für die eine Jätaktion durchgeführt werden soll, aus dem Datenpuffer abzurufen,
∘ den Abstand ($\Delta$y) zwischen einer anfänglichen Werkzeugposition und der Position der nächsten Unkrautpflanze in der zweiten Richtung (y) zu bestimmen,
∘ die optimale Werkzeugaktivierungsposition ($x_{OPT}$) für die abgerufene Unkrautpflanze basierend auf der Position der Unkrautpflanze und der Zeit, die benötigt wird, um die Jätaktion durchzuführen, zu berechnen, und

die Jätsteuereinheit (12) angepasst ist, um den Stellantrieb (24) zu steuern, sodass das Jätwerkzeug (8) beim Empfangen des Aktivierungsbefehls über den bestimmten Abstand ($\Delta$y) in der zweiten Richtung zum Durchführen der Jätaktion an der Unkrautpflanze bewegt wird.

2. Jätmaschine nach Anspruch 1, wobei der Stellantrieb (24) angepasst ist, um bei Aktivierung das Jätwerkzeug (8) in einer Hin- und Herbewegung relativ zu der Plattform (3) in der zweiten Richtung (y) zwischen einer anfänglichen Werkzeugposition ($y_{TI}$) und einer variablen Werkzeugposition linear zu bewegen.

3. Jätmaschine nach Anspruch 1 oder 2, wobei die Jätsteuereinheit (12) angepasst ist, um basierend auf einer vorgegebenen Formel für die Zeit, die benötigt wird, um eine Jätaktion in Abhängigkeit von dem Ab-

stand ($\Delta$y) zwischen der Anfangsposition des Werkzeugs und der Position der nächsten Unkrautpflanze in der zweiten Richtung durchzuführen, die Zeit zu berechnen, die zum Bewegen des Werkzeugs zu der Position einer nächsten Unkrautpflanze benötigt wird, und um basierend auf der aktuellen Geschwindigkeit (V) der Plattform, der berechneten Zeit, die zum Durchführen der Jätaktion benötigt wird, und der Position ($y_w$) der Unkrautpflanze in der zweiten Richtung die optimale Werkzeugaktivierungsposition ($x_{OPT}$) zu bestimmen.

4. Jätmaschine nach einem der vorstehenden Ansprüche, wobei das Jätwerkzeug (8) ein Schneidwerkzeug mit einer Schneidkante (30) ist, die im Wesentlichen senkrecht zu der zweiten Richtung (y) angeordnet ist.

5. Jätmaschine nach einem der Ansprüche 1 - 4, wobei der Stellantrieb (24) mindestens eine horizontale Welle (32), die in der zweiten Richtung (y) beweglich ist, ein vertikales Abstandselement (34), das an einem Ende der horizontalen Welle angebracht ist, einen Motor (26), der zum Bewegen der mindestens einen horizontalen Welle (32) entlang ihrer Achse angeordnet ist, sodass das Jätwerkzeug (8) in einer Hin- und Herbewegung relativ zu der Plattform (3) bewegt wird, umfasst, und das Jätwerkzeug (8) an einem unteren Ende des vertikalen Abstandselements (34) angebracht ist.

6. Jätmaschine nach einem der vorstehenden Ansprüche, wobei die Jätmaschine (1) eine Stützeinheit (36) umfasst, die beweglich mit der Plattform (3) verbunden ist, um der Stützeinheit (36) zu ermöglichen, sich im Laufe der Bewegung der Plattform relativ zu der Plattform in einer vertikalen Richtung (z) zu bewegen, wobei die Stützeinheit (36) ein Stützrad (38) umfasst und der Jätmechanismus (6) an der Stützeinheit angebracht ist.

7. Jätmaschine nach Anspruch 6, wobei das Pflanzenerkennungssystem (10) einen Sensor (11) zum Erkennen der Pflanzen umfasst, wobei der Sensor (11) an der Stützeinheit (36) angebracht ist.

8. Jätmaschine nach einem der vorstehenden Ansprüche, wobei der Antriebsmechanismus zum Antreiben der Plattform einen oder mehrere Sensoren (16) zum Messen der Geschwindigkeit (V) der Plattform (3) umfasst und die Datenverarbeitungsschaltung (13) der Jätsteuereinheit konfiguriert ist, um Informationen über die Geschwindigkeit der Plattform von dem Antriebsmechanismus zu erhalten.

9. Verfahren zum Durchführen von Jäten unter Verwendung einer Jätmaschine (1), umfassend eine bewegliche Plattform (3) und einen Jätmechanismus (6), der mit der Plattform verbunden ist, und umfassend ein Jätwerkzeug (8), das angepasst ist, um eine Jätaktion durchzuführen, wobei das Jätwerkzeug eine bekannte anfängliche Position relativ zu der Plattform aufweist und das Verfahren umfasst:

- Erkennen von Pflanzen in einem Abstand vor dem Jätwerkzeug (8), während sich die Plattform (3) in einer ersten Richtung (x) bewegt,
- Bestimmen, ob die erkannten Pflanzen Unkrautpflanzen oder Kulturpflanzen sind, und
- Bestimmen der Positionen der erkannten Kulturpflanzen,

**dadurch gekennzeichnet, dass** das Verfahren umfasst:

- Bestimmen der Positionen der erkannten Unkrautpflanzen,
- Bestimmen, ob die Unkrautpflanzen einen Sicherheitsabstand (d) von den Kulturpflanzen erfüllen, indem die Positionen der Unkrautpflanze und der Kulturpflanzen verglichen werden, und Bestimmen, ob der Abstand zwischen der Unkrautpflanze und den Kulturpflanzen größer als der Sicherheitsabstand ist,
- Sortieren der Unkrautpflanzen, die in Abhängigkeit von ihren Positionen den Sicherheitsabstand erfüllen,
- Auswählen der nächsten Unkrautpflanze, für die basierend auf dem Sortieren eine Jätaktion durchgeführt werden soll,
- Erhalten von Informationen über die Geschwindigkeit (V) der Plattform,
- Bestimmen des Abstands (Δy) zwischen der anfänglichen Werkzeugposition und der Position der nächsten Unkrautpflanze in einer zweiten Richtung (y) senkrecht zur ersten Richtung (x),
- Berechnen einer optimalen Werkzeugaktivierungsposition ($x_{OPT}$) für die abgerufene Unkrautpflanze basierend auf der Position der Unkrautpflanze, der aktuellen Position des Werkzeugs in der ersten Richtung (x), der Geschwindigkeit der Plattform und der Zeit, die benötigt wird, um die Jätaktion durchzuführen,
- Erzeugen eines Aktivierungsbefehls, wenn das Werkzeug die optimale Werkzeugaktivierungsposition ($x_{OPT}$) erreicht hat, und
- Bewegen des Jätwerkzeugs (8) über den bestimmten Abstand (Δy) in der zweiten Richtung zum Durchführen der Jätaktion der Unkrautpflanze beim Empfangen des Aktivierungsbefehls.

10. Verfahren nach Anspruch 9, wobei der Schritt, der die optimale Werkzeugaktivierungsposition berechnet, basierend auf einer vorgegebenen Formel für die Zeit, die benötigt wird, um in Abhängigkeit von dem Abstand (Δy) zwischen der anfänglichen Position des Werkzeugs und der Position der nächsten Unkrautpflanze in der zweiten Richtung eine Jätaktion durchzuführen, das Berechnen der Zeit, die zum Bewegen des Werkzeugs zu der Position der nächsten Unkrautpflanze benötigt wird, und Bestimmen der optimalen Werkzeugaktivierungsposition basierend auf der aktuellen Geschwindigkeit der Plattform, der berechneten Zeit, die zum Durchführen der Jätaktion benötigt wird, und der Position der Unkrautpflanze in der ersten Richtung, umfasst.

**Revendications**

1. Machine de désherbage (1) comprenant :

- une plate-forme mobile (3),
- un mécanisme d'entraînement (15, 18) entraînant la plate-forme dans une première direction (x),
- un mécanisme de désherbage (6) relié à la plate-forme comprenant un outil de désherbage (8) conçu pour effectuer une action de désherbage et un actionneur (24) conçu pour déplacer l'outil de désherbage (8) dans une deuxième direction (y) perpendiculaire à la première direction (x) à la réception d'une instruction d'activation,
- un système de détection de plantes (10) conçu pour :

o détecter des plantes à une distance devant l'outil de désherbage (8) alors que la plate-forme se déplace dans la première direction (x),
o déterminer le type des plantes détectées, le type étant une indication indiquant si les plantes détectées sont des mauvaises herbes ou des plantes cultivées, et
o déterminer les positions des plantes cultivées détectées, et

- une unité de commande de désherbage (12) pour commander le mécanisme de désherbage (6), dans laquelle l'unité de commande de désherbage (12) comprend un circuit de traitement de données (13) configuré pour :

o obtenir des informations concernant la vitesse de la plate-forme,
o recevoir les positions des plantes cultivées détectées depuis le système de détection de plantes (10),
o calculer une position optimale d'activation d'outil ($x_{OPT}$) sur la base de la position actuelle de l'outil dans la première direction (x), et de la vitesse (V) de la plate-forme, et

envoyer une instruction d'activation au mécanisme de désherbage lorsque l'outil a atteint la position optimale d'activation d'outil, **caractérisée en ce que**

- l'outil de désherbage (8) est conçu pour effectuer l'action de désherbage lorsque l'outil est déplacé dans la deuxième direction (y),
- le système de détection de plantes (10) est conçu pour déterminer les positions des mauvaises herbes détectées,
- le circuit de traitement de données (13) est configuré pour :

   ◦ recevoir les positions des mauvaises herbes détectées depuis le système de détection de plantes (10),
   ◦ déterminer si les mauvaises herbes détectées respectent une distance de sécurité par rapport aux plantes cultivées en comparant les positions de la mauvaise herbe et des plantes cultivées et en déterminant si la distance entre la mauvaise herbe et les plantes cultivées est plus grande que la distance de sécurité,
   ◦ trier les mauvaises herbes qui respectent la distance de sécurité (d) en fonction de leurs positions et stocker les mauvaises herbes triées dans un tampon de données (20),
   ◦ récupérer la mauvaise herbe suivante pour laquelle une action de désherbage doit être effectuée depuis le tampon de données,
   ◦ déterminer la distance ($\Delta$y) entre une position initiale d'outil et la position de la mauvaise herbe suivante dans la deuxième direction (y),
   ◦ calculer la position optimale d'activation d'outil ($x_{OPT}$) pour la mauvaise herbe récupérée sur la base de la position de la mauvaise herbe et du temps nécessaire pour effectuer l'action de désherbage, et

   l'unité de commande de désherbage (12) est conçue pour commander l'actionneur (24) de sorte que l'outil de désherbage (8) est déplacé de la distance déterminée ($\Delta$y) dans la deuxième direction pour effectuer l'action de désherbage sur la mauvaise herbe à la réception de l'instruction d'activation.

2. Machine de désherbage selon la revendication 1, dans laquelle l'actionneur (24) est conçu pour lors de l'activation déplacer linéairement l'outil de désherbage (8) dans un mouvement de va-et-vient par rapport à la plate-forme (3) dans la deuxième direction (y) entre une position initiale d'outil ($y_{TI}$) et une position variable d'outil.

3. Machine de désherbage selon la revendication 1 ou 2, dans laquelle l'unité de commande de désherbage (12) est conçue pour calculer le temps nécessaire pour déplacer l'outil à la position d'une mauvaise herbe suivante sur la base d'une formule prédéterminée pour le temps nécessaire pour effectuer une action de désherbage en fonction de la distance ($\Delta$y) entre la position initiale de l'outil et la position de la mauvaise herbe suivante dans la deuxième direction, et pour déterminer la position optimale d'activation d'outil ($x_{OPT}$) sur la base de la vitesse actuelle (V) de la plate-forme, du temps calculé nécessaire pour effectuer l'action de désherbage, et de la position ($y_w$) de la mauvaise herbe dans la deuxième direction.

4. Machine de désherbage selon l'une quelconque des revendications précédentes, dans laquelle ledit outil de désherbage (8) est un outil de coupe ayant un bord de coupe (30) agencé sensiblement perpendiculaire à la deuxième direction (y).

5. Machine de désherbage selon l'une quelconque des revendications 1 à 4, dans laquelle ledit actionneur (24) comprend au moins un arbre horizontal (32) mobile dans la deuxième direction (y), un élément d'espacement vertical (34) fixé à une extrémité de l'arbre horizontal, un moteur (26) agencé pour déplacer l'au moins un arbre horizontal (32) le long de son axe de sorte que l'outil de désherbage (8) est déplacé dans ledit mouvement de va-et-vient par rapport à la plate-forme (3), et l'outil de désherbage (8) est fixé à une extrémité inférieure de l'élément d'espacement vertical (34).

6. Machine de désherbage selon l'une quelconque des revendications précédentes, dans laquelle la machine de désherbage (1) comprend une unité de support (36) reliée de manière mobile à la plate-forme (3) pour permettre à l'unité de support (36) de se déplacer par rapport à la plate-forme dans une direction verticale (z) pendant un mouvement de la plate-forme, l'unité de support (36) comprend une roue de support (38), et le mécanisme de désherbage (6) est fixé à l'unité de support.

7. Machine de désherbage selon la revendication 6, dans laquelle le système de détection de plantes (10) comprend un capteur (11) pour détecter les plantes, lequel capteur (11) est fixé à l'unité de support (36).

8. Machine de désherbage selon l'une quelconque des revendications précédentes, dans laquelle le mécanisme d'entraînement pour entraîner la plate-forme comprend un ou plusieurs capteurs (16) pour mesurer la vitesse (V) de la plate-forme (3) et le circuit de traitement de données (13) de l'unité de commande de désherbage est configuré pour obtenir des informations concernant la vitesse de la plate-forme depuis le mécanisme d'entraînement.

9. Procédé pour effectuer un désherbage en utilisant une machine de désherbage (1) comprenant une plate-forme mobile (3) et un mécanisme de désherbage (6) relié à la plate-forme et comprenant un outil de désherbage (8) conçu pour effectuer une action de désherbage, dans lequel l'outil de désherbage a une position initiale connue par rapport à la plate-forme et le procédé comprend :

- la détection de plantes à une distance devant l'outil de désherbage (8) alors que la plate-forme (3) se déplace dans une première direction (x),
- le fait de déterminer si les plantes détectées sont des mauvaises herbes ou des plantes cultivées, et
- la détermination des positions des plantes cultivées détectées,

**caractérisé en ce que** le procédé comprend :

- la détermination des positions des mauvaises herbes détectées,
- le fait de déterminer si les mauvaises herbes respectent une distance de sécurité (d) par rapport aux plantes cultivées en comparant les positions de la mauvaise herbe et des plantes cultivées et en déterminant si la distance entre la mauvaise herbe et les plantes cultivées est plus grande que la distance de sécurité,
- le tri des mauvaises herbes qui respectent la distance de sécurité en fonction de leurs positions,
- la sélection de la mauvaise herbe suivante pour laquelle une action de désherbage doit être effectuée sur la base du tri,
- l'obtention d'informations concernant la vitesse (V) de la plate-forme,
- la détermination de la distance ($\Delta y$) entre la position initiale d'outil et la position de la mauvaise herbe suivante dans une deuxième direction (y) perpendiculaire à la première direction (x),
- le calcul d'une position optimale d'activation d'outil ($x_{OPT}$) pour la mauvaise herbe récupérée sur la base de la position de la mauvaise herbe, de la position actuelle de l'outil dans la première direction (x), de la vitesse de la plate-forme, et du temps nécessaire pour effectuer l'action de désherbage,
- la génération d'une instruction d'activation lorsque l'outil a atteint la position optimale d'activation d'outil ($x_{OPT}$), et
- le déplacement de l'outil de désherbage (8) de la distance déterminée ($\Delta y$) dans la deuxième direction pour effectuer l'action de désherbage sur la mauvaise herbe à la réception de l'instruction d'activation.

10. Procédé selon la revendication 9, dans lequel l'étape calculant la position optimale d'activation d'outil comprend le calcul du temps nécessaire pour déplacer l'outil à la position de la mauvaise herbe suivante sur la base d'une formule prédéterminée pour le temps nécessaire pour effectuer une action de désherbage en fonction de la distance ($\Delta y$) entre la position initiale de l'outil et la position de la mauvaise herbe suivante dans la deuxième direction, et la détermination de la position optimale d'activation d'outil sur la base de la vitesse actuelle de la plate-forme, du temps calculé nécessaire pour effectuer l'action de désherbage, et de la position de la mauvaise herbe dans la première direction.

Fig. 1

Fig. 2

Fig. 3

Fig. 4a

Fig. 4b

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101707992
- WO 2019083336 A
- WO 2019239502 A